# EUROPÄISCHE PATENTSCHRIFT

(11) **EP 3 658 384 B1**
(45) Veröffentlichungstag und Bekanntmachung des Hinweises auf die Patenterteilung: **28.10.2020**
(21) Anmeldenummer: 18752674.4
(22) Anmeldetag: 27.07.2018
(51) Int. Cl.: B41K 1/10, B41K 1/14, B41K 3/06, B41K 3/10

(54) **HANDSTEMPEL**
HAND STAMP
TAMPON ENCREUR MANUEL

(30) Priorität: 27.07.2017 AT 506282017
(43) Veröffentlichungstag der Anmeldung: 03.06.2020
(73) Patentinhaber: COLOP STEMPELERZEUGUNG SKOPEK GESELLSCHAFT M.B.H. & CO. KG., 4600 Wels (AT)
(72) Erfinder: FABER, Ernst, 4600 Wels (AT)
(74) Vertreter: Sonn & Partner Patentanwälte
(86) Internationale Anmeldenummer: PCT/AT2018/060166
(87) Internationale Veröffentlichungsnummer: WO 2019/018871

(56) Entgegenhaltungen:
- AT-U1- 10 680
- DE-B- 1 006 867

## Beschreibung

Die Erfindung betrifft einen Handstempel, insbesondere einen Selbstfärbestempel mit Oberschlagfärbung, mit einer ein statisches Klischee aufweisenden Stempelplatte und mit einem verstellbaren Typenaggregat mit verschiedenen Drucktypen, wobei das statische Klischee der Stempelplatte einen zweidimensionalen Stempelcode aufweist, wobei das Typenaggregat eine Brücke mit einer Stützfläche aufweist, welche Stützfläche vorgesehen ist, eine für einen Stempelabdruck eingestellte Drucktype eines verstellbaren Typenbands des Typenaggregats abzustützen.

Die Erfindung betrifft zudem ein Verfahren zum Erzeugen einer der Authentifizierung eines Objekts dienenden Markierung auf dem Objekt mit einem solchen Handstempel.

Der Handstempel kann beispielsweise ein selbstfärbender Stempel, ein nicht selbstfärbender Stempel, ggf. auch ein elektronischer Stempel oder dergl. sein.

Handstempel die eine Stempelplatte mit einem statischen Klischee und ein verstellbares Typenaggregat mit verschiedenen Drucktypen aufweisen sind bekannt. Dabei dient das statische Klischee der Aufbringung von unveränderlicher Information, beispielsweise eines Firmennamens oder eines Logos, auf ein Schriftstück, während das verstellbare Typenaggregat die Aufbringung veränderbarer Information, wie eines einstellbaren Datums ermöglicht. Oftmals werden solche bestempelten Schriftstücke handschriftlich unterzeichnet, um den Inhalt des Schriftstücks zu bestätigen. Als Drucktype wird dabei das Druckrelief eines Schriftzeichens oder Symbols bezeichnet, wobei ein Stempelabdruck der gefärbten Drucktype eine Darstellung des betreffenden Schriftzeichens oder Symbols auf einem Untergrund erzeugt. Bei einem Handstempel der hier gegenständlichen Art, mit einem verstellbaren Typenaggregat, umfasst ein Stempelabdruck Abdrücke vom statischen Klischee und von nur einem Teil der verschiedenen Drucktypen, abhängig von einer Einstellung des verstellbaren Typenaggregats. D.h. die Einstellung des verstellbaren Typenaggregats legt fest, welche Drucktypen in einer Abdruckebene des Handstempels angeordnet sind und folglich einen Teil der Abdruckfläche des Handstempels bilden, welche bei der Erzeugung eines Stempelabdrucks mit dem Untergrund in Berührung kommt.

Die AT 10 680 U1 zeigt einen Handstempel mit Oberschlagfärbung mit einem Typenaggregat, welches mehrere schleifenförmige Typenbänder mit Stempeltypen aufweist, wobei eine Abdruckplatte mit der Abdruckseite neben den Stempeltypen angeordnet ist.

Die DE 10 2014 001 355 A1 offenbart einen programmierbaren Stempel, der veränderbare Informationen maschinenlesbar als Stempelabdruck aufbringen kann. Der Stempel weist ein Stempelbild auf, das zumindest teilweise aus einem Matrixfeld mit einer Mehrzahl von Bildelementen in einer vorgegebenen Anordnung besteht. Zumindest ein Teil der Bildelemente ist über zumindest einen Aktor von einer passiven Position, in welcher die Bildelemente keinen Stempelabdruck erzeugen, in eine aktive Position verschiebbar und, zur Erzeugung des Stempelabdrucks, über eine Halteeinrichtung in der aktiven Position fixierbar. In der aktiven Position steht das Bildelement aus der Vorderebene des Matrixfeldes hervor. Das Stempelbild kann beispielsweise einen QR-Code aufweisen.

Der programmierbare Stempel ist jedoch kompliziert aufgebaut und in der Handhabung umständlich. Außerdem besitzt der programmierbare Stempel keine Stempelplatte mit einem statischen Klischee. Dadurch sind die Abdrücke eines Stempels, abgesehen von der Einstellung der verschiebbaren Bildelemente, nicht von den Abdrücken anderer Stempel unterscheidbar.

Zudem sind Verfahren zum Erzeugen einer der Authentifizierung eines Objekts dienenden Markierung auf einem Objekt bekannt.

Die DE 10 2007 050 691 A1 offenbart eine stochastische Markierung von Druckprodukten in einem Verfahren zur Feststellung der Authentizität, bei dem charakteristische Merkmale des Drucks bzw. des Drucksubstrates innerhalb eines gedruckten Codes erfasst werden. Dabei werden an einer Stelle des Fertigungsprozesses einer Verpackung mittels einer Bildaufnahmeeinrichtung stochastische Kennwerte des Druckprozesses und/oder der Papierstruktur aufgenommen, in einem nachfolgenden Verarbeitungsschritt analysiert und codiert, und als Code, verschlüsselt und unverschlüsselt, beispielsweise in einer Datenbank abgelegt. Somit wird die Druck- und Substratstruktur als ein individuelles Kennzeichen für die Identität und Authentizität eines Produkts benutzt. Der gedruckte Code kann ein 2D-Matrixcode oder eine beliebige redundante Symbolfolge, beispielsweise aus Buchstaben eines definierten Schrifttyps, sein.

Nachteilig an diesem Verfahren ist die Komplexität, welche aus der Erfassung und Verarbeitung stochastischer Kennwerte des Druckprozesses oder der Papierstruktur resultiert.

Die JP 2002150212 A offenbart einen Handstempel zur Erzeugung eines von Personen lesbaren und maschinenlesbaren Stempelabdrucks. An einem seiner Enden weist der Handstempel einen Stempelbereich A mit einem von einer Person lesbaren statischen Text in einem oberen Abschnitt B, einem maschinenlesbaren zweidimensionalen statischen Code in einem mittleren Abschnitt C und verstellbaren Datumstypen in einem unteren Abschnitt D auf.

Der Handstempel ermöglicht somit nur eine Einstellung eines Datums. Eine Datumsangabe ist jedoch ungeeignet Produkte die bspw. am gleichen Tag entstanden sind zu unterscheiden. Insbesondere ist eine Datumsangabe nicht oder nur unzureichend zur Verwendung als Authentifizierungsmerkmal (d.h. zur Prüfung der Echtheit einer Markierung) geeignet.

Die JP 2016221820 A betrifft einen andersartigen Handstempel, welcher kein verstellbares Typenaggregat aufweist und auch kein Authentifizierungsmerkmal erzeugen kann.

Es ist nun Aufgabe der Erfindung, einen Handstempel wie eingangs angegeben zu schaffen, der eine Aufbringung eines Stempelbilds auf ein Objekt, beispielsweise ein Schriftstück oder einen dreidimensionalen Körper, zur zuverlässigen nachträglichen Authentifizierung des bestempelten Objekts durch einen Benutzer auf einfache Weise ermöglicht. Der Handstempel soll kostengünstig herstellbar und einfach in der Handhabung sein.

Es ist ebenso Aufgabe der Erfindung, ein Verfahren wie eingangs angegeben zu schaffen, welches die Erzeugung und Verarbeitung der der Authentifizierung eines Objekts dienenden Markierung am Objekt auf für einen Benutzer möglichst einfache und kostengünstige Weise, mit einem Handgerät ermöglicht.

Hierfür sieht die Erfindung einen Handstempel wie in Anspruch 1 und ein Verfahren wie in Anspruch 8 definiert vor. Vorteilhafte Ausführungsformen und Weiterbildungen sind in den abhängigen Ansprüchen angegeben.

Gemäß der Erfindung ist vorgesehen, dass das Typenaggregat eine Brücke mit einer Stützfläche aufweist, welche Stützfläche vorgesehen ist, eine für einen Stempelabdruck eingestellte Drucktype eines verstellbaren Typenbands des Typenaggregats abzustützen, und deren Breitenerstreckung in Richtung der Verstellung des Typenbands größer als die Erstreckung der Drucktype in der selben Richtung ist. Der zweidimensionale Stempelcode enthält Information, insbesondere codierte Information, die der Verifikation der Echtheit des Objekts dient. Hierfür kann der zweidimensionale Stempelcode Buchstaben, Ziffern und/oder Symbole enthalten. Insbesondere kann der zweidimensionale Stempelcode codierte Buchstaben, Ziffern und/oder Symbole enthalten. Das statische Klischee, welches ein fixes Druckmuster oder Druckrelief ist, ist durch die Stempelplatte des Handstempels gebildet. Dass es einen zweidimensionalen Stempelcode aufweist bedeutet, dass der zweidimensionale Stempelcode durch das statische Klischee repräsentiert wird. Folglich entspricht ein Stempelabdruck des statischen Klischees ebenfalls einer Repräsentation des zweidimensionalen Stempelcodes. Im Gegensatz zu bekannten Handstempeln, bei welchen das statische Klischee einen für einen Benutzer unmittelbar erkennbaren Schriftzug bspw. einen Firmennamen aufweist, kann der zweidimensionale Stempelcode Informationen enthalten, die nicht unmittelbar erkennbar sind. Mittels geeigneter Codierung der im statischen Klischee enthaltenen Information kann die Sicherheit gegenüber Fälschungen des Stempelabdrucks erhöht werden, da einem Fälscher nicht bekannt ist, welche Information im statischen Klischee enthalten sein soll und wie diese Information zu codieren ist. Eine geeignete Codierung kann beispielsweise eine Verschlüsselung mit einem privaten Schlüssel umfassen. Der Handstempel weist zudem ein verstellbares Typenaggregat mit verschiedenen Drucktypen auf, um verschiedene Objekte mit zueinander unterschiedlichen Drucktypen bestempeln zu können. Das verstellbare Typenaggregat ist vorgesehen, um unterschiedliche Objekte, die einen selben zweidimensionalen Stempelcode tragen, mit unterschiedlichen Drucktypen abstempeln zu können. Auf diese Weise können die unterschiedlichen Objekte mit gleichem Stempelcode unterschieden werden. Für eine eindeutige Verifikation jedes Objekts ist es zweckmäßig, die mit dem verstellbaren Typenaggregat aufgebrachte Information für ein und dasselbe statische Klischee nur ein einziges Mal zu verwenden. Da jedoch der Handstempel der Aufbringung einer der Authentifizierung des Objekts dienenden Markierung auf dem Objekt dient, kann in Kenntnis der Art des Objekts auf verschiedenen Arten von Objekten, die durch den Benutzer unterscheidbar sind, eine bereits für eine andere Art von Objekten verwendete mit dem verstellbaren Typenaggregat aufgebrachte Information gegebenenfalls wiederverwendet werden. Das verstellbare Typenaggregat ist vorzugsweise manuell durch einen Benutzer, bspw. mittels Einstellrädern, verstellbar. Die beim Erzeugen eines Stempelabdrucks verwendeten Drucktypen des verstellbaren Typenaggregats hängen von dessen Einstellung ab; d.h. je nach Einstellung des verstellbaren Typenaggregats wird ein Stempelabdruck unterschiedlicher Drucktypen auf dem Objekt erzeugt. Die verschiedenen Drucktypen des verstellbaren Typenaggregats können beispielsweise auf einem oder mehreren verstellbaren Typenträgern angeordnet sein. Die Typenträger können beispielsweise Typenbänder, Typenräder oder relativ zur Stempelplatte bewegliche Schieber sein. Wie bereits erwähnt, kann das Objekt ein im Wesentlichen zweidimensionales Objekt, bspw. ein Schriftstück, oder ein im Vergleich dazu im Wesentlichen dreidimensionales Objekt mit deutlichen Erstreckungen in allen drei Raumdimensionen sein. Der Handstempel ist vorzugsweise ausgebildet, sowohl das statische Klischee als auch die mit dem verstellbaren Typenaggregat aufgebrachte Information in einem einzigen Betätigungsvorgang durch den Handstempel am Objekt aufzubringen. Das statische Klischee bzw. die Stempelplatte kann neben den Drucktypen des verstellbaren Typenaggregats angeordnet sein. Alternativ kann die Stempelplatte die verstellbaren Drucktypen umgeben, sodass die Drucktypen im Stempelabdruck innerhalb des statischen Klischees vorgesehen sind. Obgleich der zweidimensionale Stempelcode ein durch einen Benutzer erst durch Decodierung des Stempelcodes interpretierbarer Zeichensatz ist, kann der zweidimensionale Stempelcode selbstverständlich auch Zeichen enthalten die durch einen Benutzer ohne Decodierung des Stempelcodes unmittelbar lesbar sind.

Die Brücke (auch "Steg") bezeichnet dabei einen Teil des Typenaggregats, an welchem das zumindest eine verstellbare Typenband anliegt, sodass die Stützfläche der Brücke an der Rückseite der für den Abdruck eingestellten Drucktype des Typenbands angeordnet ist. Die Brücke bildet somit ein Lager für das Typenband, welches bei der Erstellung eines Abdrucks den anliegenden Abschnitt des Typenbands samt Drucktype gegen den Untergrund drückt. Indem eine Prüfperson die am Objekt aufgestempelten Drucktypen manipuliert, könnte die Prüfperson ohne geeignete Gegenmaßnahmen in einem derart manipulierten Prüfverfahren unerwünschten Zugang zu digitalen Repräsentationen beliebiger anderer Objekte mit demselben Stempelcode erhalten. Um diesen unerwünschten Zugang zu erschweren, wird ein Vergleich des den Stempelabdruck aufweisenden Objekts mit digitalen Repräsentationen durch die Prüfperson nur dann zugelassen, wenn der Stempelabdruck erfolgreich authentifiziert wurde. Eine erfolgreiche Authentifizierung eines mit dem Handstempel erzeugten Stempelabdrucks kann beispielsweise davon abhängen, dass ein für die Authentifizierung vorgesehenes Softwareprogramm feststellt, dass die Positionen der Drucktype des Typenbands im Stempelabdruck mit einer bei der Registrierung des Stempelabdrucks hinterlegten Position der Drucktype des Typenbands, z.B. der Position der Drucktype des Typenbands in der digitalen Repräsentation, übereinstimmt. Dabei wird die Position der Drucktype des Typenbands in Bezug auf das statische Klischee betrachtet. Hierfür weist das Typenaggregat eine Brücke bzw. einen Steg mit einer Stützfläche auf, deren Breitenerstreckung in Umlaufrichtung des Typenbands größer als die Erstreckung der Drucktype in der selben Richtung ist. Somit können verschiedene Positionen der Drucktype an der Stützfläche in Richtung der Breitenerstreckung der Stützfläche durch den Benutzer des Handstempels eingestellt werden. Das Typenaggregat ist vorzugsweise für die Einstellung von zumindest zwei verschiedenen Positionen des Zeichens bzw. der Drucktype in Richtung der Breitenerstreckung der Stützfläche ausgebildet. Um die Erfassung der eingestellten Position des Zeichens zu erleichtern, kann eine Skalierung an der Stützfläche bzw. an der Brücke vorgesehen sein. Besonders bevorzugt ist das Typenaggregat für eine stufenlose Einstellung der Position des Zeichens bzw. der Drucktype in Richtung der Breitenerstreckung der Stützfläche ausgebildet.

Gemäß einer bevorzugten Ausführungsform der Erfindung kann der zweidimensionale Stempelcode eine eindeutige Benutzerkennung repräsentieren. Die Benutzerkennung ist dem Benutzer des Handstempels, d.h. dem Erzeuger des Stempelabdrucks, eindeutig zugeordnet. Somit ist auch der mit dem Handstempel erzeugte Stempelabdruck am Objekt eindeutig einem Benutzer zugeordnet. Der Benutzer des Handstempels kann sich seine Benutzerkennung entweder selbst aussuchen, oder die Benutzerkennung wird in einer bevorzugten Variante von einem Hersteller des Handstempels oder von einer sonstigen, autorisierten Person vergeben. Jedenfalls ist eine Vergabe einer selben Benutzerkennung für unterschiedliche Benutzer zu vermeiden. Es können jedoch mehrere Handstempel desselben Benutzers die gleiche Benutzerkennung tragen. Die Benutzerkennung kann dabei in Wesentlichen beliebige, mit dem zweidimensionalen Stempelcode codierbare Information, wie einen Benutzernamen, Firmennamen oder Buchstaben, Ziffern, Symbole oder eine Kombination davon enthalten. Zusammen mit einem Stempelabdruck des verstellbaren Typenaggregats ermöglicht die Benutzerkennung eine eindeutige Markierung eines Objekts, sodass die Benutzerkennung zusammen mit dem Stempelabdruck des verstellbaren Typenaggregats eindeutig einem Objekt zugeordnet werden kann. Anhand einer solchen eindeutigen Zuordnung können beispielsweise zusätzliche Informationen zu dem Objekt aus einer zentralen Datenbank abgerufen werden, z.B. eine digitale Repräsentation des Objekts (Scan eines Dokuments oder Foto eines Produkts) oder Daten zur Authentifizierung des Objekts (etwa betreffend einen Ort und/oder Zeitpunkt der Erstellung oder der Registrierung des Objekts) .

Um eine Prüfperson in die Lage zu versetzen, die Authentizität eines Objekts überprüfen zu können, welches einen mit dem Handstempel erzeugten Stempelabdruck trägt, ist es zweckmäßig, wenn das statische Klischee zudem einen zweidimensionalen Anwendungscode aufweist, welcher sich vom zweidimensionalen Stempelcode unterscheidet. Der zweidimensionale Anwendungscode enthält für die Durchführung des Prüfvorgangs erforderliche Information und kann hierfür von der die Prüfung durchführenden Prüfperson mittels einer geeigneten Lesevorrichtung und eines geeigneten Softwareprogramms erfasst und durch das Softwareprogramm verarbeitet werden. Insbesondere enthält der Anwendungscode Instruktionen, für eine universelle Lesevorrichtung (z.B. ein Smartphone oder Tablet-PC, jeweils mit einer Kamera), um diese zur Durchführung eines Prüfvorgangs unter Verwendung des Stempelcodes anzuleiten. Der zweidimensionale Anwendungscode und der zweidimensionale Stempelcode können auf derselben Stempelplatte oder, in einer äquivalenten Ausführungsform, auf einer jeweils eigenen Stempelplatte des Handstempels angeordnet sein.

Günstiger Weise ist der zweidimensionale Stempelcode und/oder der zweidimensionale Anwendungscode ein zweidimensionaler maschinenlesbarer Zeichencode, insbesondere ein Matrix-Code, vorzugsweise ein QR-Code. Im allgemeinen Fall weist der zweidimensionale maschinenlesbare Zeichencode punktförmige, linienförmige und/oder flächenhafte, zu Schriftzeichen unterschiedliche Symbole auf. Wenn der zweidimensionale maschinenlesbare Zeichencode vorteilhafter Weise aus dem Stand der Technik bekannt ist, können für die Erzeugung bzw. Codierung und für die Verarbeitung bzw. Decodierung des Stempelcodes und/oder Anwendungscodes geeignete, ebenfalls bekannte und somit kostengünstig anwendbare Softwareprogramme verwendet werden. Günstiger Weise ist der zweidimensionale maschinenlesbare Zeichencode ein genormter Code. Der zweidimensionale maschinenlesbare Zeichencode kann auf einfache Weise mittels eines geeigneten Lesegeräts, beispielsweise einem Smartphone, welches eine Kamera und geeignete Verarbeitungssoftware aufweist, erfasst werden. Insbesondere als Matrix-Code, vorzugsweise QR-Code, kann der Zeichencode, sowohl vom Benutzer des Handstempels als auch von einer Prüfperson einfach erfasst werden.

Für die Prüfung der Originalität eines Objekts, welches einen mit dem Handstempel erzeugten Stempelabdruck trägt, ist es besonders günstig, wenn der zweidimensionale Anwendungscode eine Internetadresse repräsentiert. Unter der Internetadresse ist vorzugsweise ein Softwareprogramm abgelegt oder referenziert (z.B. in einen "App-Store" oder "Play-Store"), welches die Decodierung des zweidimensionalen Stempelcodes und die Auswertung eines Stempelabdrucks des verstellbaren Typenaggregats ermöglicht und, zu Vergleichszwecken, die Erfassung einer digitalen Repräsentation des den Stempelabdruck aufweisenden Objekts freigibt. Dabei wird aus dem zweidimensionalen Stempelcode die Benutzerkennung ermittelt unter welcher die digitale Repräsentation des Objekts vom Benutzer des Handstempels angelegt und mit einer Einstellung oder einem Abdruck des verstellbaren Typenaggregats verknüpft wurde, um einen Vergleich der digitalen Repräsentation mit dem Objekt durch eine Prüfperson zu ermöglichen. Beispielsweise wird mittels des unter der Internetadresse abgelegten Softwareprogramms die dem Stempelabdruck zugeordnete digitale Repräsentation des Objekts an einem Smartphone der Prüfperson dargestellt.

Um in Bezug auf das statische Klischee unterschiedliche Positionen einer selben Drucktype auf verschiedenen Stempelabdrücken einfach unterscheiden zu können, ist es vorteilhaft, wenn die Breitenerstreckung der Stützfläche zumindest 1,5-mal so groß, vorzugsweise zumindest 2-mal so groß wie die Erstreckung des Zeichens in der selben Richtung ist. Auf diese Weise wird ein zweckmäßig erstreckter Bereich für die Anordnung der Drucktype an einer ausgewählten Position der Stützfläche geschaffen.

Um eine zweckmäßig große Anzahl von Objekten mit dem selben zweidimensionalen Stempelcode anhand der Drucktypen unterscheiden zu können, ist es günstig, wenn das Typenaggregat zumindest zwei, vorzugsweise zumindest vier unabhängig verstellbare Typenträger, insbesondere mit Ziffern und/oder Buchstaben als Drucktypen, aufweist. Vorzugsweise weist das Typenaggregat zwei, drei, vier, fünf oder sechs solche verstellbare Typenträger auf. Beispielsweise können mit einem Typenaggregat, welches vier verstellbare Typenträger jeweils mit Ziffern von 0 bis 9 aufweist, 10000 Objekte mit einem selben zweidimensionalen Stempelcode unterschieden werden.

Gemäß der Erfindung ist auch ein Verfahren vorgesehen, zum Erzeugen einer der Authentifizierung eines Objekts dienenden Markierung auf dem Objekt, mit einem Handstempel gemäß der vorangegangenen Beschreibung, wobei das Verfahren umfasst:
- Einstellen zumindest einer Drucktype des Typenaggregats für einen Stempelabdruck;
- Erzeugen eines Stempelabdrucks des statischen Klischees und der zumindest einen eingestellten Drucktype auf dem Objekt;
- Erstellen einer digitalen Repräsentation des den Stempelabdruck aufweisenden Objekts;
- Registrieren einer Kombination des statischen Klischees mit der zumindest einen eingestellten Drucktype und Verknüpfen der registrierten Kombination mit der erstellten digitalen Repräsentation.

In dem Verfahren zum Erzeugen einer Markierung auf einem Objekt, welche Markierung der Authentifizierung des Objekts dient, wird die Markierung durch einen Benutzer mit einem Handstempel in Form eines Stempelabdrucks auf das Objekt aufgebracht. Der Handstempel weist eine Stempelplatte mit einem statischen Klischee und ein verstellbares Typenaggregat mit verschiedenen Drucktypen auf. Insbesondere ist der Handstempel gemäß der vorstehenden Beschreibung ausgebildet, weshalb auf eine Wiederholung der Merkmale des Handstempels für die Beschreibung des Verfahrens verzichtet wird. Die Drucktype des Typenaggregats, welche eine Unterscheidung von Objekten mit dem selben aufgestempelten statischen Klischee ermöglicht, wird am Handstempel durch den Benutzer des Handstempels eingestellt. Das Einstellen der zumindest einen Drucktype kann beispielsweise ein individuelles Einstellen mehrerer Drucktypen umfassen, wie beispielsweise bei einer fortlaufenden Nummerierung. Ein individuelles Einstellen bedeutet in diesem Zusammenhang, dass bei jeder Wiederholung des Verfahrens zum Erzeugen einer Markierung die Einstellung der einen oder mehreren Drucktype(n) geändert wird, sodass sich jede erzeugte Markierung von der zeitlich davor mit demselben Handstempel erzeugten Markierung unterscheidet (und somit "individuell" ist). Die Wahl der Drucktype kann durch den Benutzer selbst erfolgen, wobei dieser sicherstellen wird, dass das Objekt mit der Drucktype, insbesondere einer Kombination von Drucktypen des Typenaggregats, jeweils nur einmal bestempelt wird. Da im späteren Registrierungsschritt des Verfahrens ohnehin die für einen durchgeführten Stempelvorgang eingestellte Drucktype erfasst wird, kann der Benutzer bei der Auswahl der Drucktype, d.h. bei der Vermeidung einer unbeabsichtigten Wiederverwendung einer Drucktype, durch ein für die Registrierung benutztes Softwareprogramm unterstützt werden. Beispielsweise kann das Softwareprogramm nach Eingabe der zur Einstellung am Typenaggregat vorgesehenen Drucktype(n) eine Fehlermeldung ausgeben, wenn die Drucktype(n) bereits zuvor registriert, d.h. verwendet, wurden. Alternativ kann das Softwareprogramm selbst die einzustellende(n) Drucktype(n) vorschlagen, wobei dann das Softwareprogramm ausgebildet ist, nur nicht registrierte Drucktype(n) vorzuschlagen.

Nach dem Einstellen zumindest einer Drucktype des Typenaggregats durch den Benutzer, wird durch den Benutzer mittels des Handstempels ein Stempelabdruck (Abdruck) des statischen Klischees und der zumindest einen eingestellten Drucktype auf dem Objekt erzeugt. Daraufhin wird vom Benutzer eine digitale Repräsentation, vorzugsweise eine digitale optische Abbildung, des den Stempelabdruck aufweisenden Objekts, d.h. auch des Stempelabdrucks selbst, erstellt. Hierfür kann das Objekt beispielsweise eingescannt oder fotografiert werden. Im Rahmen des beschriebenen Verfahrens können jedoch auch andere als optisch erfassbare Merkmale des Objekts, sofern diese zur Unterscheidung von Objekten geeignet sind, ergänzend oder alternativ zu den optisch erfassbaren Merkmalen digital erfasst und als digitale Repräsentation verwendet werden. Beispielsweise kann von einem mehrere Seiten umfassenden Schriftstück nur eine einzige Seite mit dem Stempelabdruck versehen werden und gemeinsam mit einem zusätzlichen Merkmal des Schriftstücks, wie die Anzahl der Wörter oder eine aus dem Text errechnete Prüfsumme, als digitale Repräsentation verwendet werden. In jedem Fall weist die digitale Repräsentation für das Objekt und den Stempelabdruck charakteristische digitale Daten auf.

Nachdem eine digitale Repräsentation des den Stempelabdruck aufweisenden Objekts erstellt wurde, wird vom Benutzer eine Kombination des statischen Klischees mit der zumindest einen eingestellten Drucktype registriert und die registrierte Kombination mit der erstellten digitalen Repräsentation verknüpft. Für das Registrieren der genannten Kombination können das statische Klischee und die zumindest eine eingestellte Drucktype auf einem Speichermedium abgelegt, insbesondere in eine Datenbank eingetragen werden. Zudem kann die erstellte digitale Repräsentation des Objekts, z.B. in Form eines Bilds und/oder anderer digitaler Daten, auf dem Speichermedium abgelegt bzw. in die Datenbank eingetragen und dabei der registrierten Kombination zugeordnet werden. Auf diese Weise wird eine eindeutige Verknüpfung des statischen Klischees mit der zumindest einen eingestellten Drucktype und der digitalen Repräsentation des Objekts geschaffen. Hierbei ist es günstig, wenn ein Adressbereich auf dem Speichermedium, insbesondere in der Datenbank, in welchem die digitale Repräsentation des Objekts abgelegt wird, durch die Kombination aus statischem Klischee und Drucktype festgelegt wird. Eine anwenderfreundliche Benutzeroberfläche zur Eingabe des statischen Klischees, und gegebenenfalls dem statischen Klischee zugeordneter Daten, wie einer Prüfsumme, der zumindest einen eingestellten Drucktype und der digitalen Repräsentation des Objekts, wird vorzugsweise durch ein für die Registrierung vorgesehenes Softwareprogramm bereitgestellt.

Gemäß einer bevorzugten Ausführungsform des Verfahrens kann beim Registrieren eine dem statischen Klischee zugeordnete Benutzerkennung mit einer digitalen Repräsentation der eingestellten Drucktype verknüpft werden. Demnach kann der Benutzer zur Registrierung seine ihm eindeutig zugeordnete Benutzerkennung im Speichermedium ablegen bzw. in der Datenbank eintragen. Dies erübrigt die Eintragung des dem Benutzer ebenfalls eindeutig zugeordneten statischen Klischees in Form seiner digitalen Repräsentation, z.B. als digitales Bild. Beispielsweise wird dem Benutzer seine eindeutige Benutzerkennung, welche Buchstaben, Ziffern und/oder Sonderzeichen aufweisen kann, gemeinsam mit dem Handstempel zugestellt.

Um Missbrauch, d.h. eine unerlaubte Registrierung, durch für eine Registrierung nicht vorgesehene Benutzer zu vermeiden, kann vorgesehen sein, dass vor dem Registrieren eine mit dem statischen Klischee (oder der zugeordneten Benutzerkennung) verknüpfte Berechtigung zur Registrierung neuer Verbindungen mit eingestellten Drucktypen überprüft wird. Demnach wird anhand des vom Benutzer beim Registrieren angegebenen statischen Klischees, vorzugsweise vom für die Registrierung vorgesehenen Softwareprogramm, geprüft, ob der Benutzer berechtigt ist, eine Kombination des statischen Klischees mit zumindest einer eingestellten Drucktype zu registrieren.

Das Verfahren kann zudem folgende Schritte aufweisen:
- Generieren und Anzeigen einer Vorgabe der zumindest einen einzustellenden Drucktype des Typenaggregats,
wobei das Einstellen der zumindest einen Drucktype entsprechend der angezeigten Vorgabe erfolgt,
wobei beim Registrieren eine Kombination des statischen Klischees mit der generierten Vorgabe der Drucktype registriert wird. Auf diese Weise ist es für den Benutzer nicht erforderlich, selbst die zumindest eine Drucktype auszuwählen und gegebenenfalls dabei darauf zu achten, nur bisher nicht benutze Drucktypen für die Registrierung zu verwenden. Stattdessen kann eine Vorgabe der zumindest einen einzustellenden Drucktype des Typenaggregats, beispielsweise von dem für die Registrierung benutzten Softwareprogramm, generiert und dem Benutzer angezeigt werden. Hierfür ist das Softwareprogramm günstiger Weise ausgebildet, nur nicht registrierte Drucktype(n) vorzuschlagen. Dabei wird die Vorgabe der Drucktype abhängig vom statischen Klischee generiert. Zweckmäßiger Weise stellt der Benutzer die zumindest eine Drucktype entsprechend der angezeigten Vorgabe ein und registriert die Kombination des statischen Klischees mit der generierten Vorgabe der Drucktype.

Um einer Prüfperson unerwünschten Zugang zu anderen Objekten als jenem, welches durch die zumindest eine Drucktype gekennzeichnet ist, zu erschweren, ist es günstig, wenn beim Einstellen sowohl die Drucktype des Typenaggregats als auch die Position der eingestellten Drucktype beim Abdruck relativ zum statischen Klischee eingestellt wird, wobei zumindest die Position der eingestellten Drucktype zufällig festgelegt wird. Demnach kann der Benutzer des Handstempels die zumindest eine Drucktype und eine beliebige, zufällig gewählte Position der zumindest eine Drucktype relativ zum statischen Klischee einstellen. Somit können von einer Prüfperson zwar registrierte Drucktypen erraten werden, ein Erraten der zufällig eingestellten Position der zumindest eine Drucktype ist jedoch unwahrscheinlich. Selbstverständlich kann jede Drucktype mit einer anderen Position relativ zum statischen Klischee eingestellt werden. Bei der Prüfung eines Objekts auf Echtheit wird die digitale Repräsentation eines Objekts zu Vergleichszwecken der Prüfperson nur dann angezeigt, wenn auch die Position der zumindest einen Drucktype im Stempelabdruck am realen Objekt mit der Position der Drucktype in der digitalen Repräsentation des Objekts übereinstimmt. Der Vergleich der Positionen erfolgt durch ein Softwareprogramm.

Um der Prüfperson den unerwünschten Zugang zu anderen Objekten als jenem, welches durch die zumindest eine Drucktype gekennzeichnet ist, zu erschweren, ist es überdies günstig, wenn beim Registrieren zudem die Position der eingestellten Drucktype beim Abdruck relativ zum statischen Klischee registriert wird. Dies vereinfacht den Vergleich der Position der zumindest einen Drucktype im Stempelabdruck am realen Objekt mit der Position der Drucktype in der digitalen Repräsentation des Objekts, da die Position der Drucktype in der digitalen Repräsentation des Objekts bereits bei der Registrierung bekanntgegeben wurde und nicht erst aus der digitalen Repräsentation ermittelt werden muss. Ein solcher Vergleich ermöglicht eine Authentifizierung des Stempelabdrucks vor einer etwaigen Authentifizierung des Objekts.

Weiters betrifft die Erfindung auch ein Verfahren für die Prüfung eines Objekts mit einem Stempelabdruck auf Echtheit (Authentifizierung des Objekts), wobei der Stempelabdruck ein mit einem Handstempel wie oben beschrieben oder nach einem Verfahren wie oben beschrieben erzeugter Stempelabdruck ist. Dieses Authentifizierungsverfahren ermöglicht einer Prüfperson, das Objekt mit der digitalen Repräsentation des Objekts zu vergleichen, wobei die digitale Repräsentation, wie vorstehend beschrieben, mit dem registrierten statischen Klischee, welches einer Benutzerkennung zugeordnet sein kann, und den registrierten Drucktypen des Stempelabdrucks verknüpft ist. Insbesondere kann die digitale Repräsentation des Objekts in einem Speicherbereich einer Datenbank abgelegt sein, welcher durch die registrierte Kombination des statischen Klischees mit der zumindest einen eingestellten Drucktype festgelegt ist. Wenn die Prüfperson in einem Prüfvorgang die Echtheit des Objekts feststellen möchte, erstellt die Prüfperson ein Bild des Stempelabdrucks mit dem statischen Klischee, beispielsweise durch Einscannen oder digitales Fotografieren des Stempelabdrucks. Wenn der zweidimensionale Anwendungscode des statischen Klischees eine Internetadresse repräsentiert, kann ein unter der Internetadresse abgelegtes Softwareprogramm eine zum Prüfen vorgesehene Prüfsoftware zur Verfügung stellen oder einen Verweis auf ein entsprechendes Softwareprogramm enthalten. Mittels der Prüfsoftware kann das von der Prüfperson erstellte Bild des Stempelabdrucks weiterverarbeitet werden. Vorzugsweise wird hierbei der Stempelabdruck des zweidimensionalen Stempelcodes und der Stempelabdruck der zumindest einen Drucktype des Stempelabdrucks erkannt und anhand der erkannten Daten eine Datenbankabfrage nach einer registrierten Kombination des Stempelcodes und der zumindest einen Drucktype durchgeführt. Falls zumindest eine registrierte Kombination ermittelt werden kann, wird eine damit verknüpfte digitale Repräsentation des Objekts abgefragt und an einem Anzeigegerät, beispielsweise einem Smartphone, der Prüfperson angezeigt. Die Prüfperson kann nun durch Vergleich mit dem Objekt feststellen, ob das Objekt der angezeigten digitalen Repräsentation entspricht, und so die Echtheit und Unverfälschtheit des Objekts prüfen.

Durch Manipulieren der Drucktypen des Stempelabdrucks, beispielsweise durch Überkleben der Drucktypen mit anderen Drucktypen, könnte die Prüfperson Zugang zu jenem Adressbereich erhalten, der der Kombination aus dem zweidimensionale Stempelcode und den manipulierten Drucktypen zugeordnet ist. Somit könnte die Prüfperson gezielt ein anderes Objekt betrachten. Um dies zu vermeiden, kann das Typenaggregat beispielsweise die zuvor beschriebene Brücke mit der Stützfläche aufweisen. Somit kann der Benutzer des Handstempels nicht nur die Drucktypen, sondern auch die Position der Drucktypen, vorzugsweise zufällig, einstellen. Da die Prüfperson die Position der Drucktypen auf einem ihr nicht vorliegenden Objekt nicht kennt, wird ein Manipulationsversuch scheitern. Hierfür vergleicht die Prüfsoftware die Position der gegebenenfalls manipulierten Drucktypen mit der Position der registrieren Drucktypen und zeigt das Objekt nur bei Übereinstimmung an.

Die Erfindung betrifft ganz allgemein auch einen Handstempel mit einem verstellbaren Typenaggregat (mit oder ohne einer ein statisches Klischee aufweisenden Stempelplatte), wobei das verstellbare Typenaggregat zumindest ein verstellbares Typenband mit verschiedenen Drucktypen aufweist, wobei der Handstempel dadurch gekennzeichnet ist, dass das Typenaggregat eine Brücke mit einer Stützfläche aufweist, welche Stützfläche vorgesehen ist, eine für einen Stempelabdruck eingestellte Drucktype des zumindest einen verstellbaren Typenbands des Typenaggregats abzustützen, wobei eine Breitenerstreckung der Stützfläche in Richtung der Verstellung des Typenbands größer als die Erstreckung der Drucktype in der selben Richtung ist, insbesondere zumindest 1,5 mal so groß, vorzugsweise zumindest 2 mal so groß.

Die Erfindung wird im Folgenden anhand von bevorzugten, nicht einschränkenden Ausführungsbeispielen unter Bezugnahme auf die Zeichnungen noch weiter erläutert. Es zeigen:
Fig. 1 einen Handstempel gemäß der Erfindung;
Fig. 2 eine Stempeleinheit des Handstempels aus Fig. 1 mit einer ein statisches Klischee aufweisenden einteiligen Stempelplatte und mit einem verstellbaren Typenaggregat mit verschiedenen Drucktypen;
Fig. 3 eine Variante der Stempeleinheit aus Fig. 2 mit einer ein statisches Klischee aufweisenden zweiteiligen Stempelplatte und mit einem verstellbaren Typenaggregat mit verschiedenen Drucktypen, wobei ein Teil der Stempelplatte einen zweidimensionalen Stempelcode und der andere Teil der Stempelplatte einen zweidimensionalen Anwendungscode aufweist;
Fig. 4 einen mit der Stempeleinheit aus Fig. 3 erzeugten Stempelabdruck;
Fig. 5a und Fig. 5b alternative Ausführungsformen von mit einem Handstempel gemäß der Erfindung herstellbaren Stempelabdrucken;
Fig. 6a eine Stempeleinheit für einen Handstempel, mit einem verstellbaren Typenaggregat, welches eine Brücke mit einer Stützfläche und mehrere Typenbänder aufweist, wobei die Breitenerstreckung der Stützfläche in Richtung einer Verstellung der Typenbänder größer als die Erstreckung der einzelnen Drucktypen der Typenbänder in der selben Richtung ist;
Fig. 6b einen Stempelabdruck, welcher mit gegeneinander versetzten Drucktypen und mit einem statischen Klischee hergestellt wurde;
Fig. 7 ein Ablaufdiagramm mit von einem Benutzer des Handstempels durchgeführten Verfahrensschritten zum Erzeugen einer der Authentifizierung eines Objekts dienenden Markierung auf dem Objekt; und
Fig. 8 ein Ablaufdiagramm mit von einer Prüfperson durchgeführten Verfahrensschritten zum Authentifizieren eines markierten Objekts.

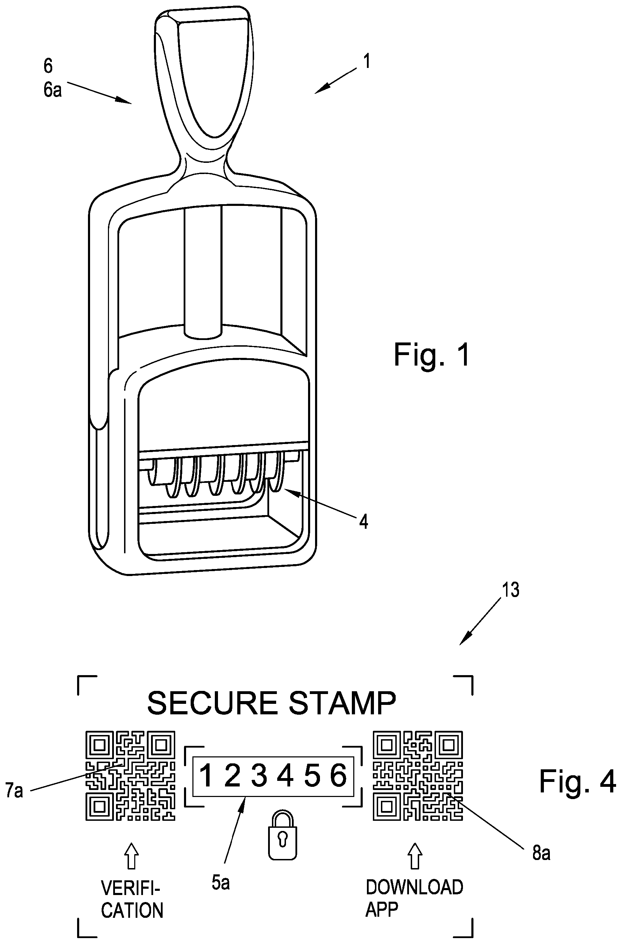

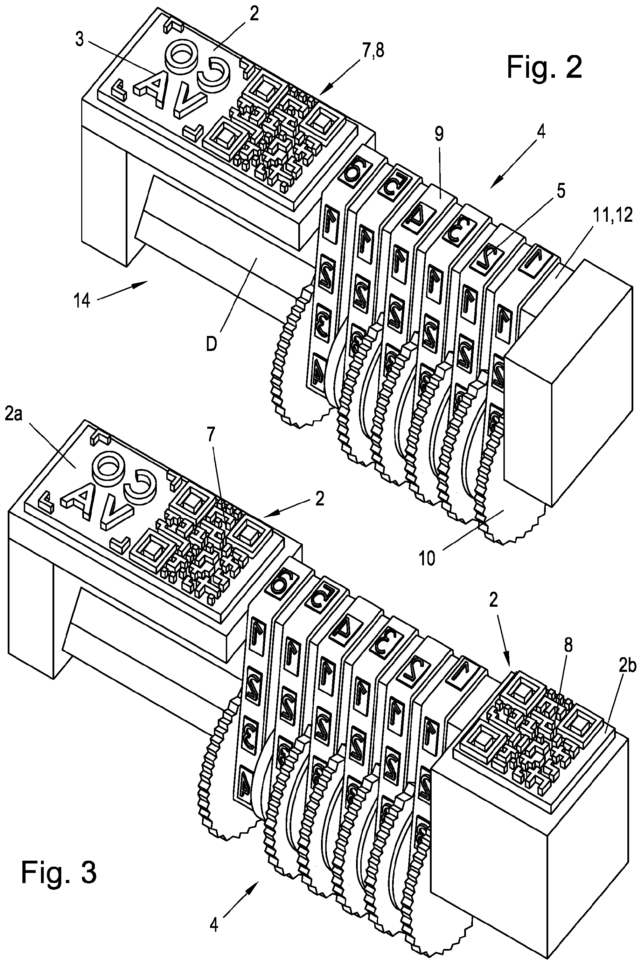

Fig. 1 zeigt einen Handstempel 1, welcher eine in Fig. 1 nicht ersichtliche Stempelplatte 2 mit einem statischen Klischee 3 und ein verstellbares Typenaggregat 4 mit verschiedenen Drucktypen 5 aufweist, vgl. insbesondere Fig. 2. Der Handstempel 1 ist ein Selbstfärbestempel mit Oberschlagfärbung. Der Handstempel 1 kann, wie an sich bekannt, in verschiedenen Ausführungen ausgebildet sein und weist bevorzugt einen Betätigungsteil 6, beispielsweise einen Handgriff 6a, zur Betätigung des Handstempels 1 auf. Durch Bewegen des Betätigungsteils 6, aus der gezeigten beispielhaften Ruhestellung nach unten in eine Abdruckstellung, gegen einen zu bestempelnden Untergrund, insbesondere gegen ein zu bestempelndes Objekt, können die Stempelplatte 2 und das Typenaggregat 4 gegen den Untergrund oder gegen das Objekt gedrückt werden.

Fig. 2 zeigt eine Stempeleinheit 14 des Handstempels 1 aus Fig. 1 mit der Stempelplatte 2 und dem Typenaggregat 4, bezogen auf eine Ruhestellung das Handstempels 1 in einer Ansicht von unten auf eine Abdruckfläche, wobei die Stempelplatte 2 ein statisches Klischee 3 mit einem zweidimensionalen Stempelcode 7 aufweist. Der zweidimensionale Stempelcode 7 repräsentiert bevorzugt eine verschlüsselte und eindeutige Benutzerkennung. Das statische Klischee 3 kann zudem einen zweidimensionalen Anwendungscode 8 aufweisen, welcher sich vom zweidimensionalen Stempelcode 7 unterscheidet. Der zweidimensionale Anwendungscode 8 repräsentiert bevorzugt eine Internetadresse. Der zweidimensionale Anwendungscode 8 kann gemäß Fig. 2 auf der selben Stempelplatte 2 wie der zweidimensionale Stempelcode 7 angeordnet und im Wesentlichen einteilig bzw. gemeinsam mit dem Stempelcode 7 ausgebildet sein, sodass der Stempelcode 7 und der Anwendungscode 8 bei visueller Betrachtung (geometrisch) wie ein einziger zweidimensionaler Code erscheinen.

Der zweidimensionale Stempelcode 7 und/oder der zweidimensionale Anwendungscode 8 können, wie Fig. 2 deutlich zu entnehmen ist, ein zweidimensionaler maschinenlesbarer Zeichencode, insbesondere ein Matrix-Code, vorzugsweise ein QR-Code sein. Die im Rahmen dieser Beschreibung erwähnten zweidimensionalen Stempelcodes sind auch als 2D-Codes bekannt. Das statische Klischee 3 der Stempelplatte 2 kann einen gestapelten Code, einen Matrixcode, einen Punktcode oder andere bekannte zweidimensionale Stempelcodes aufweisen, ein Matrixcode, insbesondere QR-Code ist jedoch bevorzugt.

In Fig. 2 ist zudem das Typenaggregat 4 mit verschiedenen Drucktypen 5 erkennbar. Die Drucktypen 5 sind auf sechs verstellbaren, insbesondere um eine Drehachse D des Typenaggregats 4 umlaufenden Typenbändern 9 angeordnet, wobei für die Verstellung der Typenbänder 9 damit drehfest gekuppelte Einstellräder 10 vorgesehen sind. Das Typenaggregat 4 weist eine Brücke 11 mit einer Stützfläche 12 auf, sodass durch Drehen der Einstellräder 10 die gegenüber der Stützfläche 12 exponierten Drucktypen 5 der einzelnen Typenbänder 9 ausgewählt werden können.

Fig. 3 zeigt eine zweiteilige Stempelplatte 2 mit einem statischen Klischee 3 und ein Typenaggregat 4, in einer Ansicht von unten, als Stempeleinheit eines alternativ ausgebildeten erfindungsgemäßen Handstempels 1. Dabei weist ein erster Teil 2a der Stempelplatte 2 den zweidimensionalen Stempelcode 7 und ein zweiter Teil 2b der Stempelplatte 2 den zweidimensionalen Anwendungscode 8 auf.

Fig. 4 zeigt einen mit einem erfindungsgemäßen Handstempel 1 erzeugten Stempelabdruck 13. Dieser wird, wie vorstehend beschrieben, von einem Benutzer des Handstempels 1 auf ein in Fig. 4 nicht dargestelltes Objekt nach Einstellen des Typenaggregats 4 aufgebracht. Danach legt der Benutzer eine digitale Repräsentation des Objekts mit dem Stempelabdruck 13 in einem Datenspeicher bzw. in einer Datenbank ab, woraufhin eine Prüfperson nach Erfassen des Stempelabdrucks 13 eines auf Authentizität zu prüfenden Objekts Einsicht in die digitale Repräsentation des mit dem Stempelabdruck 13 identifizierten Objekts erhält. Der Stempelabdruck 13 weist einen Abdruck 7a des Stempelcodes 7, einen Abdruck 8a des Anwendungscodes 8 und einen Abdruck 5a der eingestellten Drucktypen 5 des verstellbaren Typenaggregats 4 auf. Im dargestellten Beispiel wurden die Drucktypen der Ziffern 1 bis 6 am verstellbaren Typenaggregat eingestellt. Unter der Annahme, dass die sechs Typenträger für die sechs Stellen des Typenaggregats jeweils zehn verschiedene Drucktypen ("0" bis "9") aufweisen, sind 1.000.000 verschiedene Einstellungen des Typenaggregats ("000000" bis "999999") möglich, sodass eine entsprechende Zahl von Objekten eindeutig markiert und eindeutig authentifiziert werden kann. Darüber hinaus umfasst der Stempelabdruck Hinweise auf die Verwendung des Stempelabdrucks zur Authentifizierung und Validierung des den Stempelabdruck tragenden Objekts.

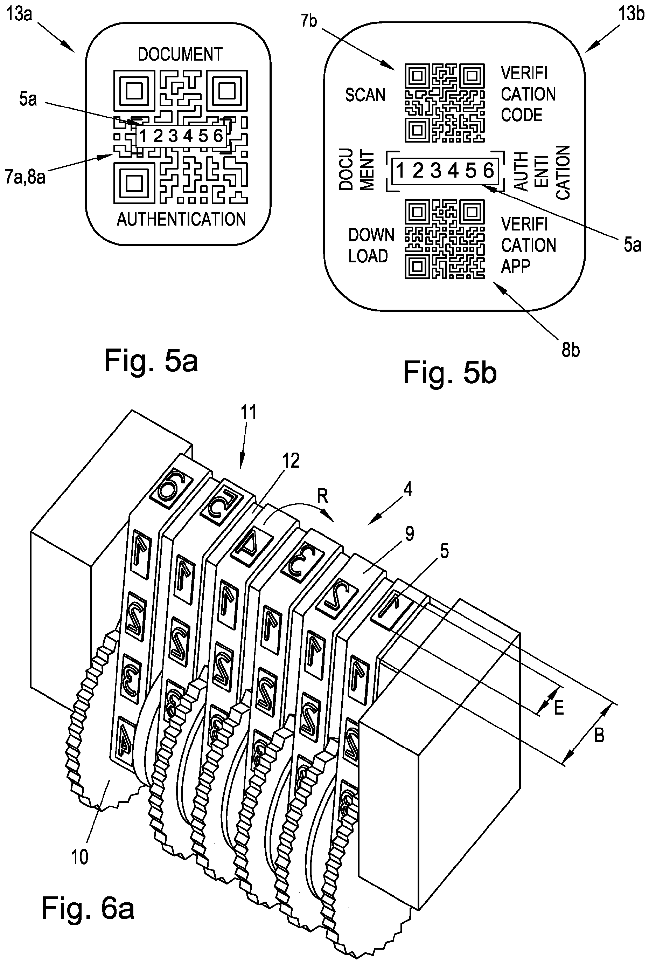

Fig. 5a zeigt einen mit einem erfindungsgemäßen Handstempel 1 hergestellten Stempelabdruck 13a mit einem einzigen QR-Code, welcher den Abdruck 8a des Anwendungscodes 8 und optional den Abdruck 7a des Stempelcodes 7 enthält. Diese Ausführungsform hat den Vorteil, das eine Prüfperson nicht durch das Vorhandensein von zwei verschiedenen QR-Codes, nämlich dem Abdruck 7a und dem Abdruck 8a, in einem Stempelabdruck 13 verwirrt werden kann. In diesem Beispiel ist der Abdruck 5a der Drucktypen 5 vom Abdruck des statischen Klischees 3 umgeben. Falls der Stempelabdruck 13a keinen Abdruck eines Stempelcodes 7 umfasst, fehlt auch eine eindeutige Benutzerkennung. In diesem Fall muss die Einstellung des Typenaggregats 4 eindeutig für alle Benutzer eines solchen Handstempels (z.B. erkennbar an einem bestimmten statischen Klischee, z.B. mit einem Anwendungscode) sein, wenn eine eindeutige Markierung gewünscht oder erforderlich ist. Dies kann beispielsweise erzielt werden, wenn die Einstellung des verstellbaren Typenaggregats von einer zentralen Stelle (z.B. einem zentralen Webservice) vorgegeben wird. Die zentrale Stelle sorgt dann dafür, dass jede Einstellung möglichst nur von einem Benutzer und nur für ein Objekt verwendet wird.

Im Vergleich zu Fig. 5a zeigt Fig. 5b einen mit einem erfindungsgemäßen Handstempel 1 herstellbaren Stempelabdruck 13b mit zwei separaten QR-Codes, von welchen einer der Abdruck 7b des Stempelcodes 7 und der andere der Abdruck 8b des Anwendungscodes 8 ist. Bei der Verwendung eines Stempelcodes 7 wird der statisehe Teil der Abdruckfläche, d.h. das statische Klischee, individuell für jeden Stempel konfiguriert und hergestellt. Dadurch kann insgesamt eine größere Vielfalt von Stempelabdrücken erzielt werden, weil jede Einstellung des Typenaggregats mit jedem Stempelcode verwendet werden kann. Die Eindeutigkeit des Stempelabdrucks 13b ist bereits dann gewährleistet, wenn die Einstellung des Typenaggregats für den jeweiligen Stempelcode nur einmal verwendet wird. Nach einer Ausführungsform kann der Stempelcode einen Stempel eindeutig identifizieren; alternativ können aber auch mehrere Stempel (z.B. eines Benutzers) denselben Stempelcode aufweisen, wobei innerhalb dieser - relativ kleinen - Gruppe von Stempeln für die Eindeutigkeit der Einstellung des Typenaggregats gesorgt wird. Der Vorteil dieser Alternative ist, dass anhand der markierten Objekte nicht erkennbar ist, welcher von mehreren Stempeln desselben Benutzers zur Markierung verwendet wurde, was andernfalls Rückschlüsse auf die internen Prozesse dieses Benutzers zulassen könnte.

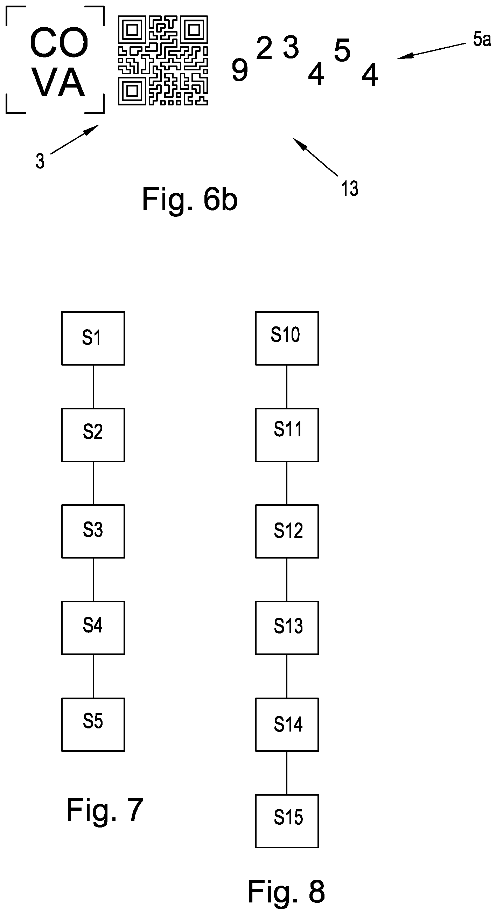

In Fig. 6a ist eine Stempeleinheit eines Handstempels 1, mit einem verstellbaren Typenaggregat 4 mit sechs Typenbändern 9, jeweils mit verschiedenen Drucktypen 5, dargestellt. Das Typenaggregat 4 gemäß Fig. 6a (und auch jenes gemäß Fig. 2 oder Fig. 3) weist eine Brücke 11 mit einer Stützfläche 12 auf. Die Stützfläche 12 ist dabei vorgesehen, eine für einen Stempelabdruck 13 eingestellte Drucktype 5 eines verstellbaren Typenbands 9 des Typenaggregats 4 abzustützen. D.h. die Typenbänder 9 verlaufen quer über die Brücke 11 und sind auf der Stützfläche 12 gleitend gelagert, sodass die auf der Stützfläche 12 aufliegenden Bandabschnitte der Typenbänder 9 in einer Ebene gehalten werden. Die Breitenerstreckung B der Stützfläche 12 ist in Richtung R der Verstellung des Typenbands 9 größer als die Erstreckung E des Zeichens bzw. der Drucktype 5 in der selben Richtung R. Somit kann beim Einstellen der Drucktypen 5 des Typenaggregats 4 sowohl die jeweilige Drucktype 5 als auch die für den Stempelabdruck 13 vorgesehene Position der eingestellten Drucktype 5 relativ zum statischen Klischee 3, d.h. entlang der Breitenerstreckung B der Stützfläche 12, eingestellt werden. Bevorzugt wird die Position der eingestellten Drucktype 5 an der Stützfläche 12 zufällig festgelegt. Im Beispiel der Fig. 6a weist das Typenaggregat 4 sechs Typenbänder 9 mit Ziffern als Zeichen bzw. Drucktypen 5 auf. Die Ziffern können gemäß Fig. 6a in Richtung R gegeneinander versetzt über der Stützfläche 12 angeordnet sein. Ein Stempelabdruck 13 mit derart gegeneinander versetzt abgedruckten Drucktypen 5a bzw. Ziffern und mit einem statischen Klischee 3, wie beispielsweise mit der Stempeleinheit gemäß Fig. 2 erzielbar, ist in Fig. 6b dargestellt.

Fig. 7 zeigt schematisch ein Ablaufdiagramm mit von einem Benutzer des Handstempels 1 durchzuführenden Verfahrensschritten zum Erzeugen einer der Authentifizierung eines Objekts dienenden Markierung auf dem Objekt. In Schritt S1 wird mit dem Typenaggregat 4 ein vorzugsweise mehrstelliger Code, beispielsweise ein Zifferncode, eingestellt. Der Code kann vorab mittels eines Softwareprogramms auf erstmalige Vergabe geprüft werden oder der Code wird von einem Softwareprogramm selbst generiert und angezeigt. In Schritt S2 wird das Objekt mit dem statischen Klischee 3 und den Drucktypen 5 vom Benutzer des Handstempels 1 bestempelt, um einen Stempelabdruck 13 zu erzeugen. In Schritt S3 kann der Stempelabdruck 13 allein digital aufgenommen, beispielsweise eingescannt oder fotografiert, und vorzugsweise auf einmalige Vergabe geprüft werden. In Schritt S4 wird das gesamte Objekt, oder zumindest jener Teil des Objekts, welcher für die Verifikation der Echtheit des Objekts wesentlich ist, digital aufgenommen, beispielsweise eingescannt oder fotografiert, um eine digitale Repräsentation des Objekts zu erstellen. Dabei kann das Objekt auch leicht verzerrt aufgenommen werden. Es können auch zusätzliche digitale Daten erfasst und der digitalen Repräsentation des Objekts zugeordnet werden. In Schritt S5 wird die digitale Repräsentation des Objekts gegebenenfalls mit den zusätzlich erfassten digitalen Daten auf einem für eine Prüfperson zugänglichen Speichermedium, insbesondere in einer Datenbank, abgelegt d.h. hochgeladen. Dabei wird zunächst die Berechtigung für die Registrierung einer Kombination des verwendeten statischen Klischees 3 oder einer dem statischen Klischee zugeordneten Benutzerkennung mit einer Einstellung der Drucktypen 5 überprüft, z.B. anhand von bestehenden Zugangsdaten und Berechtigungen des Benutzers. Falls die erforderliche Berechtigung vorliegt, wird die Kombination des verwendeten statischen Klischees 3 oder einer dem statischen Klischee zugeordneten Benutzerkennung mit der verwendeten zumindest einen eingestellten Drucktype 5 registriert und die registrierte Kombination mit der erstellten und hochgeladenen digitalen Repräsentation verknüpft. Die Verknüpfung dient dabei der Abrufbarkeit der digitalen Repräsentation anhand der Kombination von statischem Klischee oder Benutzerkennung und Einstellung der Drucktypen. Mit dem Hochladen kann auch die Bezahlung einer Gebühr verbunden sein.

Fig. 8 zeigt schematisch ein Ablaufdiagramm mit von einer Prüfperson durchzuführenden Verfahrensschritten zum Authentifizieren eines Objekts. In Schritt S10 wird der Stempelabdruck 13, beispielsweise ein QR-Code, am zu authentifizierenden Objekt digital aufgenommen, beispielsweise eingescannt oder fotografiert. Der Anwendungscode 8 des aufgenommenen Stempelabdrucks 13 führt die Prüfperson vorzugsweise zu einer Internetadresse, auf welcher ein Softwareprogramm zum Prüfen des Objekts auf Echtheit, d.h. eine Prüfsoftware, bereitgestellt ist. Falls diese Prüfsoftware auf dem verwendeten Lesegerät nicht bereits vorhanden und installiert ist, kann sie in Schritt S11 in das Lesegerät, beispielsweise ein Smartphone, der Prüfperson geladen werden. In Schritt S12 wird der aufgenommene Stempelabdruck 13 von der Prüfsoftware verarbeitet. Sollte sich hierbei herausstellen, dass der Stempelabdruck 13 nicht hinreichend genau erfasst werden konnte, kann der zweidimensionale Stempelcode 7 allein aufgenommen und die durch die Drucktypen 5 abgebildete Information manuell in das Lesegerät eingegeben werden. In Schritt S13 wird die Prüfperson mittels der Prüfsoftware informiert, ob die Kombination aus dem Stempelcode 7 und der durch die Drucktypen 5 abgebildeten Information gültig ist, d.h. ein Objekt unter dieser Kombination zuvor von einem Benutzer registriert wurde. Gegebenenfalls ist ein Zugriff auf die digitale Repräsentation des Objekts in der Datenbank nur nach Zahlung einer Gebühr möglich. In diesem Fall bezahlt die Prüfperson in Schritt S14 die geforderte Gebühr. In Schritt S15 wird die digitale Repräsentation des Objekts in der Datenbank auf ein Anzeigegerät, beispielsweise das Lesegerät, insbesondere das Smartphone der Prüfperson geladen, woraufhin die Prüfperson einen Vergleich mit dem realen Objekt durchführen kann.

## Patentansprüche

1. Handstempel (1) mit einer ein statisches Klischee (3) aufweisenden Stempelplatte (2) und mit einem verstellbaren Typenaggregat (4) mit verschiedenen Drucktypen (5), wobei das statische Klischee (3) der Stempelplatte (2) einen zweidimensionalen Stempelcode (7) aufweist, wobei das Typenaggregat (4) eine Brücke (11) mit einer Stützfläche (12) aufweist, welche Stützfläche (12) vorgesehen ist, eine für einen Stempelabdruck (13) eingestellte Drucktype eines verstellbaren Typenbands (9) des Typenaggregats (4) abzustützen, **dadurch gekennzeichnet, dass** die Breitenerstreckung (B) der Stützfläche in Richtung (R) der Verstellung des Typenbands (9) größer als die Erstreckung (E) der Drucktype in der selben Richtung (R) ist.

2. Handstempel (1) nach Anspruch 1, **dadurch gekennzeichnet, dass** der zweidimensionale Stempelcode (7) eine eindeutige Benutzerkennung repräsentiert.

3. Handstempel (1) nach Anspruch 1 oder 2, **dadurch gekennzeichnet, dass** das statische Klischee (3) zudem einen zweidimensionalen Anwendungscode (8) aufweist, welcher sich vom zweidimensionalen Stempelcode (7) unterscheidet.

4. Handstempel (1) nach einem der Ansprüche 1 bis 3, **dadurch gekennzeichnet, dass** der zweidimensionale Stempelcode (7) und/oder der zweidimensionale Anwendungscode (8) ein zweidimensionaler maschinenlesbarer Zeichencode, insbesondere ein Matrix-Code, vorzugsweise ein QR-Code ist.

5. Handstempel (1) nach Anspruch 3, **dadurch gekennzeichnet, dass** der zweidimensionale Anwendungscode (8) eine Internetadresse repräsentiert.

6. Handstempel (1) nach einem der Ansprüche 1 bis 5, **dadurch gekennzeichnet, dass** die Breitenerstreckung (B) der Stützfläche (12) zumindest 1,5-mal so groß, vorzugsweise zumindest 2-mal so groß wie die Erstreckung (E) der Drucktype in der selben Richtung (R) ist.

7. Handstempel (1) nach einem der Ansprüche 1 bis 6, **dadurch gekennzeichnet, dass** das Typenaggregat (4) zumindest zwei, vorzugsweise zumindest vier unabhängig verstellbare Typenträger (9), insbesondere mit Ziffern und/oder Buchstaben als Drucktypen (5), aufweist.

8. Verfahren zum Erzeugen einer der Authentifizierung eines Objekts dienenden Markierung auf dem Objekt, mit einem Handstempel (1) nach einem der Ansprüche 1 bis 7, wobei das Verfahren umfasst:
- Einstellen zumindest einer Drucktype (5) des Typenaggregats (4) für einen Stempelabdruck (13);
- Erzeugen eines Stempelabdrucks (13) des statischen Klischees (3) und der zumindest einen eingestellten Drucktype (5) auf dem Objekt;
- Erstellen einer digitalen Repräsentation des den Stempelabdruck (13) aufweisenden Objekts;
- Registrieren einer Kombination des statischen Klischees (3) mit der zumindest einen eingestellten Drucktype (5) und Verknüpfen der registrierten Kombination mit der erstellten digitalen Repräsentation.

9. Verfahren nach Anspruch 8, **dadurch gekennzeichnet, dass** beim Registrieren eine dem statischen Klischee (3) zugeordnete Benutzerkennung mit einer digitalen Repräsentation der eingestellten Drucktype (5) verknüpft wird.

10. Verfahren nach Anspruch 8 oder 9, **dadurch gekennzeichnet, dass** vor dem Registrieren eine mit dem statischen Klischee (3) verknüpfte Berechtigung zur Registrierung neuer Verbindungen mit eingestellten Drucktypen (5) überprüft wird.

11. Verfahren nach einem der Ansprüche 8 bis 10, **gekennzeichnet durch**
- Generieren und Anzeigen einer Vorgabe der zumindest einen einzustellenden Drucktype (5) des Typenaggregats (4),
wobei das Einstellen der zumindest einen Drucktype (5) entsprechend der angezeigten Vorgabe erfolgt,
wobei beim Registrieren eine Kombination des statischen Klischees (3) mit der generierten Vorgabe der Drucktype (5) registriert wird.

12. Verfahren nach Anspruch 11, **dadurch gekennzeichnet, dass** beim Einstellen sowohl die Drucktype (5) des Typenaggregats (4) als auch die Position der eingestellten Drucktype (5) beim Abdruck relativ zum statischen Klischee (3) eingestellt wird, wobei zumindest die Position der eingestellten Drucktype (5) zufällig festgelegt wird.

13. Verfahren nach Anspruch 12, **dadurch gekennzeichnet, dass** beim Registrieren zudem die Position der eingestellten Drucktype (5) beim Abdruck relativ zum statischen Klischee (3) registriert wird.

## Claims

1. Hand stamp (1), comprising a stamp plate (2) which has a static cliché (3), and comprising an adjustable type unit (4) which has different printing characters (5), the static cliché (3) of the stamp plate (2) having a two-dimensional stamp code (7), the type unit (4) having a bridge (11) which has a support surface (12), which support surface (12) is provided to support a printing character of an adjustable type strip (9) of the type unit (4), which printing character is set for a stamp impression (13), **characterised in that** the width extension (B) of the support surface in the direction (R) of the adjustment of the type strip (9) is greater than the extension (E) of the printing character in the same direction (R).

2. Hand stamp (1) according to claim 1, **characterised in that** the two-dimensional stamp code (7) represents a unique user identification.

3. Hand stamp (1) according to either claim 1 or claim 2, **characterised in that** the static cliché (3) also has a two-dimensional application code (8) which differs from the two-dimensional stamp code (7).

4. Hand stamp (1) according to any of claims 1 to 3, **characterised in that** the two-dimensional stamp code (7) and/or the two-dimensional application code (8) is a two-dimensional machine-readable character code, in particular a matrix code, preferably a QR code.

5. Hand stamp (1) according to claim 3, **characterised in that** the two-dimensional application code (8) represents an Internet address.

6. Hand stamp (1) according to any of claims 1 to 5, **characterised in that** the width extension (B) of the support surface (12) is at least 1.5 times as large, preferably at least 2 times as large, as the extension (E) of the printing character in the same direction (R).

7. Hand stamp (1) according to any of claims 1 to 6, **characterised in that** the type unit (4) has at least two, preferably at least four, independently adjustable type carriers (9), in particular having digits and/or letters as printing characters (5).

8. Method for generating a marking on an object which is used to authenticate the object, using a hand stamp (1) according to any of claims 1 to 7, wherein the method comprises:
- setting at least one printing character (5) of the type unit (4) for a stamp impression (13);
- generating a stamp impression (13) of the static cliché (3) and the at least one set printing character (5) on the object;
- creating a digital representation of the object having the stamp impression (13);
- registering a combination of the static cliché (3) with the at least one set printing character (5) and linking the registered combination to the digital representation created.

9. Method according to claim 8, **characterised in that**, during the registration, a user identification associated with the static cliché (3) is linked to a digital representation of the set printing character (5).

10. Method according to either claim 8 or claim 9, **characterised in that**, before the registration, an authorisation linked to the static cliché (3) for registering new connections to set printing characters (5) is checked.

11. Method according to any of claims 8 to 10, **characterised by**
- generating and displaying a specification of the at least one printing character (5) to be set of the type unit (4),
the at least one printing character (5) being set in accordance with the displayed specification,
a combination of the static cliché (3) with the generated specification of the printing character (5) being registered during registration.

12. Method according to claim 11, **characterised in that**, during setting, both the printing character (5) of the type unit (4) and the position of the set printing character (5) in the impression are set relative to the static cliché (3), at least the position of the set printing charactere (5) being randomly specified.

13. Method according to claim 12, **characterised in that**, during the registration, the position of the set printing character (5) in the impression relative to the static cliché (3) is also registered.

## Revendications

1. Tampon encreur manuel (1) comportant une plaque de tampon (2) pourvue d'un cliché statique (3) et une unité de caractères (4) réglable ayant différents caractères d'impression (5), le cliché statique (3) de la plaque de tampon (2) présentant un code de tampon (7) bidimensionnel, l'unité de caractères (4) présentant un pont (11) pourvu d'une surface de soutien (12), ladite surface de soutien (12) étant prévue pour soutenir un caractère d'impression, réglé pour une empreinte de tampon (13), d'une bande de caractères réglable (9) de l'unité de caractères (4),
**caractérisé en ce que**
l'extension en largeur (B) de la surface de soutien dans la direction (R) du réglage de la bande de caractères (9) est supérieure à l'extension (E) du caractère d'impression dans la même direction (R).

2. Tampon encreur manuel (1) selon la revendication 1,
**caractérisé en ce que** le code de tampon bidimensionnel (7) représente une identification unique de l'utilisateur.

3. Tampon encreur manuel (1) selon la revendication 1 ou 2,
**caractérisé en ce que** le cliché statique (3) présente en outre un code d'application bidimensionnel (8) qui est différent du code de tampon bidimensionnel (7).

4. Tampon encreur manuel (1) selon l'une des revendications 1 à 3,
**caractérisé en ce que** le code de tampon bidimensionnel (7) et/ou le code d'application bidimensionnel (8) est un code de caractères bidimensionnel lisible par machine, en particulier un code de matrice, de préférence un code QR.

5. Tampon encreur manuel (1) selon la revendication 3,
**caractérisé en ce que** le code d'application bidimensionnel (8) représente une adresse Internet.

6. Tampon encreur manuel (1) selon l'une des revendications 1 à 5,
**caractérisé en ce que** l'extension en largeur (B) de la surface de soutien (12) est au moins 1,5 fois plus grande, de préférence au moins deux fois plus grande, que l'extension (E) du caractère d'impression dans la même direction (R).

7. Tampon encreur manuel (1) selon l'une des revendications 1 à 6,
**caractérisé en ce que** l'unité de caractères (4) comporte au moins deux, de préférence au moins quatre, supports de caractères (9) réglables indépendamment les uns des autres, en particulier ayant des chiffres et/ou des lettres comme caractères d'impression (5).

8. Procédé pour générer un marquage sur un objet servant à l'authentification de l'objet, au moyen d'un tampon encreur manuel (1) selon l'une des revendications 1 à 7, le procédé comprenant :
- le réglage d'au moins un caractère d'impression (5) de l'unité de caractères (4) pour une empreinte (13) ;
- la génération d'une empreinte (13) du cliché statique (3) et dudit au moins un caractère d'impression réglé (5) sur l'objet ;
- la formation d'une représentation numérique de l'objet présentant l'empreinte (13) ;
- l'enregistrement d'une combinaison du cliché statique (3) avec ledit au moins un caractère d'impression réglé (5) et la liaison de la combinaison enregistrée avec la représentation numérique formée.

9. Procédé selon la revendication 8,
**caractérisé en ce que**, lors de l'enregistrement, une identification de l'utilisateur associée au cliché statique (3) est liée à une représentation numérique du caractère d'impression réglé (5).

10. Procédé selon la revendication 8 ou 9,
**caractérisé en ce qu'**avant l'enregistrement, une autorisation liée au cliché statique (3) pour l'enregistrement de nouvelles connexions avec des caractères d'impression réglés (5) est vérifiée.

11. Procédé selon l'une des revendications 8 à 10,
**caractérisé par**
- la génération et l'affichage d'une définition dudit au moins un caractère d'impression (5) à régler de l'unité de caractères (4),
le réglage dudit au moins un caractère d'impression (5) étant effectué en fonction de la définition affichée,
une combinaison du cliché statique (3) avec la définition générée du caractère d'impression (5) étant enregistrée lors de l'enregistrement.

12. Procédé selon la revendication 11,
**caractérisé en ce que** lors du réglage, tant le caractère d'impression (5) de l'unité de caractères (4) que la position du caractère d'impression réglé (5) pendant l'impression sont réglés par rapport au cliché statique (3), au moins la position du caractère d'impression réglé (5) étant fixée de manière aléatoire.

13. Procédé selon la revendication 12,
**caractérisé en ce que**, lors de l'enregistrement, la position du caractère d'impression réglé (5) pendant l'impression par rapport au cliché statique (3) est également enregistrée.
